# EUROPEAN PATENT SPECIFICATION

(11) **EP 3 046 438 B1**
(45) Date of publication and mention of the grant of the patent: **06.03.2019**
(21) Application number: 14845433.3
(22) Date of filing: 22.09.2014
(51) Int. Cl.: B33Y 80/00

(54) **FASTENING DEVICE**
BEFESTIGUNGSVORRICHTUNG
DISPOSITIF DE FIXATION

(30) Priority: 20.09.2013 US 201361880204 P; 30.09.2013 US 201361884840 P; 04.11.2013 US 201361899445 P
(43) Date of publication of application: 27.07.2016
(73) Proprietor: Hickies, Inc., Brooklyn, NY 11249 (US)
(72) Inventor: FRYDLEWSKI, Gaston, Brooklyn, New York 11211 (US); WAINGARTEN, Maria Raquel, Brooklyn, New York 11211 (US); REEB, David, Sykesville, Maryland 21784 (US)
(74) Representative: Westphal, Mussgnug & Partner Patentanwälte mbB
(86) International application number: PCT/US2014/056824
(87) International publication number: WO 2015/042541

(56) References cited:
- FR-A- 958 758
- US-A- 3 522 635
- US-A- 4 144 621
- US-A- 4 296 515
- US-A- 5 214 826
- US-A- 5 295 315
- US-A- 5 586 353
- US-A- 5 822 844
- US-A1- 2005 268 435
- US-A1- 2006 254 089

## Description

### TECHNICAL FIELD

The present invention relates generally to fastening devices and systems using the fastening devices. More particularly, the present invention provides fastening devices that secure opposing sides of an article selected for allowing secure engagement and reliability against unintended separation and breakage.

### BACKGROUND

Industrial applications of fastening devices include the use of thread or string, including shoe laces. Unfortunately, during use, particularly during rough sports play or hard work activities, these conventional fastening devices are often broken, shred, or become unreliable, or even dangerous to users.

Accordingly, there is a need for an improved fastening device that provides an improved reliability and use. Further, there is also a need to improve a method of using a fastening device where the installation and application of a fastening device allows an adaptive use to a variety of alternative engagements with articles requiring fastening.
From FR 958 758 a fastening device for a connecting two identified openings in an article of shoe wear is known which comprises an elongated main body member which has a pointed first end portion and a pointed second end portion opposite of the first end portion, which may specifically have the form of arrow heads.

### SUMMARY

In response, it is now recognized that there is a need for a higher performance fastening system that adapts to a user's needs and is durable and tough in use.

The invention discloses a fastening device according to independent claim 1. Preferred embodiments are disclosed in the appended dependent claims.

A method for connecting two identified openings can include: providing a fastening device including an elongated main body member defining a longitudinal axis, and first and second tip end members located at opposite ends of the longitudinal axis; inserting the first tip end member through one of the identified openings; pulling on the first tip end member, thereby pulling a first deformable interference portion through the one of the identified openings; inserting the second tip end member through the other of the identified openings; and pulling on the second tip end member, thereby pulling a second deformable interference portion through the other of the identified openings; whereby the first and second deformable interference portions retain the fastening device in the two identified openings.

The above and other aspects, features and advantages of the present invention will become apparent from the following description read in conjunction with the accompanying drawings, in which like reference numerals designate the same elements.

### BRIEF DESCRIPTION OF THE DRAWINGS

Fig. 1 is a perspective view of a fastening device according to an embodiment of the present invention.
Fig. 2 is a top view of the device shown in Fig. 1.
Fig. 3 is a side view of the device shown in Fig. 1.
Fig. 4 is an end view of the device shown in Fig. 1.
Fig. 5 is a perspective view of an embodiment of the invention.
Fig. 6 shows a decorative insert for use with the embodiment of Fig. 5.
Fig. 7 is a top view of a third embodiment of the invention.
Fig. 8 shows the view of Fig. 2, with one of the deformable regions being stretched by tension "T," resulting in a reduction in diameter from d1 to d2.
FIG. 9 shows a device according to an embodiment, wherein the first tip is inserted into an eyelet of an athletic shoe.
Fig. 10 shows the device of Fig. 9 after the first deformable region has been pulled through the eyelet.
Fig. 11 shows the device of Fig. 10, after being installed by pulling the second deformable region through an eyelet on the opposite side of the shoe.

### DETAILED DESCRIPTION

Reference will now be made in detail to embodiments of the invention. Wherever possible, same or similar reference numerals are used in the drawings and the description to refer to the same or like parts or steps. The drawings are in simplified form and are not to precise scale. The word "couple," "interfit," "connect" and similar terms do not necessarily denote direct and immediate connections, but also include connections through intermediate elements or devices. For purposes of convenience and clarity only, directional (up/down, etc.) or motional (forward/back, bend/fold, push/pull, etc.) terms may be used with respect to the drawings.

Various operations may be described as multiple discrete operations in turn, in a manner that may be helpful in understanding embodiments of the present invention; however, the order of description should not be construed to imply that these operations are order dependent.

As mentioned before, embodiments comprise an elongated unitary or one-piece body having respective first and second ends. Each end terminates in a tip portion which has a cross-section that permits the tip to be inserted through the eyelet for which it is intended. The tip can be of a length suitable for grasping with the fingers. According to an embodiment, interposed between, and connecting the tip portion and the elongate body can be a resilient, deformable region that circumscribes and defines an opening. The deformable region may have a circular shape and define a substantially circular opening, but according to embodiments, it is arc-shaped and defines an arc-shaped opening. The convex side of the arc can be oriented toward the body, while the concave side can be oriented toward the tip portion.

In use, the tip may be inserted through an eyelet, and then grasped and pulled so as to apply tension substantially along the long axis of the device. This tension can cause the deformable region, and the opening it defines, to stretch along the long axis of the device. The tension and resulting deformation can cause the sides of the deformable region to move toward the axis, reducing the effective cross-section of the deformable region until it can pass through the eyelet. Upon release of the tension, the deformable region rebounds to its relaxed state, in which it no longer can fit through the eyelet. The process is repeated with the second end portion of the device, by pulling it through a second eyelet of the article to be fastened, or through an eyelet of a second article which the practitioner wishes to attach to the first article.

The fastening tension provided by an installed device of the invention is borne by the central body of the device. At the eyelets, this tension is created by an outward-directed force applied axially to the deformable regions, at the point where contact is made with the surface of the article immediately surrounding the eyelets. According to embodiments, this outward force does not cause a reduction in cross-section of the deformable region, however, and the device resists being pulled through the eyelet. In embodiments, where the deformable region and the opening it defines are arc-shaped, the deformable region can be particularly resistant to compression because the inner portion of the arc, adjacent to the tip, is situated within the radius of the outer portion of the arc, where it physically blocks the deformation required for a reduction in cross-section. Although resistant to being pulled through the eyelet in the inward direction, the device can readily be removed by pulling on the tip in the outward direction, thereby reversing the installation process.

For ease and economics of manufacture, embodiments of the invention can be molded from a single elastomeric material. Suitable materials include, but are not limited to, synthetic rubbers, silicone rubbers and polyurethanes. In devices having such monolithic construction, the desired amount of stretch or rigidity in any particular portion of the device will be obtained by varying the thickness of that portion. In alternative embodiments, strengthening or stiffening elements may be inserted, laminated, or molded into the elastomer. Such elements include, but are not limited to, monofilament, spun, or woven fiber reinforcement materials, rigid or semi-rigid inserts, and elastomeric inserts or layers having a different modulus and/or elasticity. The devices may also be formed directly from two or more different materials, for example by bi-injection or two-shot injection molding, so as to have the desired distribution of physical properties along the length of the device. Embodiments may be made by 3D printing or additive manufacturing.

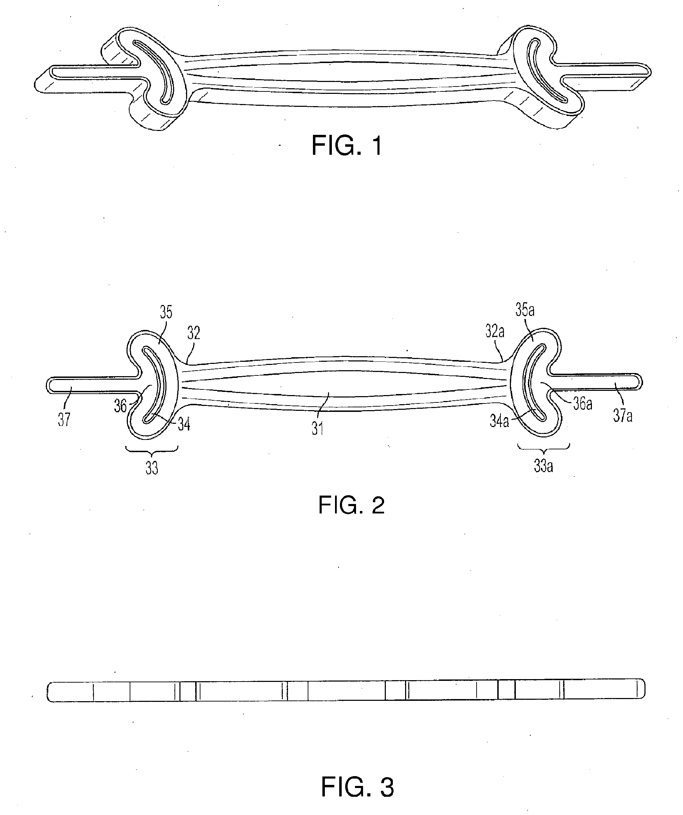

Referring now to Fig. 1, a perspective view of one embodiment of the invention is provided without numbering, to clearly convey the overall appearance of the device.

Fig. 2 is a top view of the same device. The device includes an elongated central body 31, which terminates at necks 32 and 32a. Deformable regions 33 and 33a are attached at the necks. In the embodiment shown, the deformable regions are arc-shaped, and circumscribe and define bounded arc-shaped openings 34 and 34a. The deformable regions have outer portions 35 and 35a, and inner portions 36 and 36a having a smaller radius. On the sides opposite to the necks, the deformable regions are attached to tips 37 and 37a. The devices are not limited to any particular dimensions. The length of the central body 31 is chosen according to the desired spacing between eyelets in the fastened articles. The length of the tips 37 and 37a can be chosen to be sufficient to provide an adequate grip for the fingers, after the tip has been inserted through an eyelet. The diameter of the tips, and the dimensions of the deformable regions can be determined by the dimensions of the eyelets through which they must pass upon installation, and through which they must not pass when the device is in use and under tension.

It will be appreciated that the arc shape of the deformable region shown in the drawings represents only one of numerous equivalent embodiments. The openings 34 and 34a defined by the deformable regions may likewise be of any geometric shape. In embodiments, the inner portions 36 and 36a of the deformable regions are so situated as to interfere with the inward deformation of the outer portions 35 and 35a, thereby preventing a reduction in cross- section. This function requires only that the inner portions occupy the space into which the outer portions collapse upon application of tension, as described below. It will be appreciated that this is a matter of relative location, and that the invention is not limited to any particular geometric shapes for the inner and outer portions of the deformable region. Thus the inner portion 36 can have a generally convex shape, and the outer portion 35 can have a complimentary, generally concave shape. For example a convex inner portion 36 may have the shape of a wedge, with the concave outer portion 35 having a complimentary V-shape. Portion 36 may take the form of a rectangular block, and portion 35 may feature a complimentary rectangular cavity. Other combinations of shapes will readily occur to those of skill in the art. According to embodiments, the openings 34, 34A can be omitted.

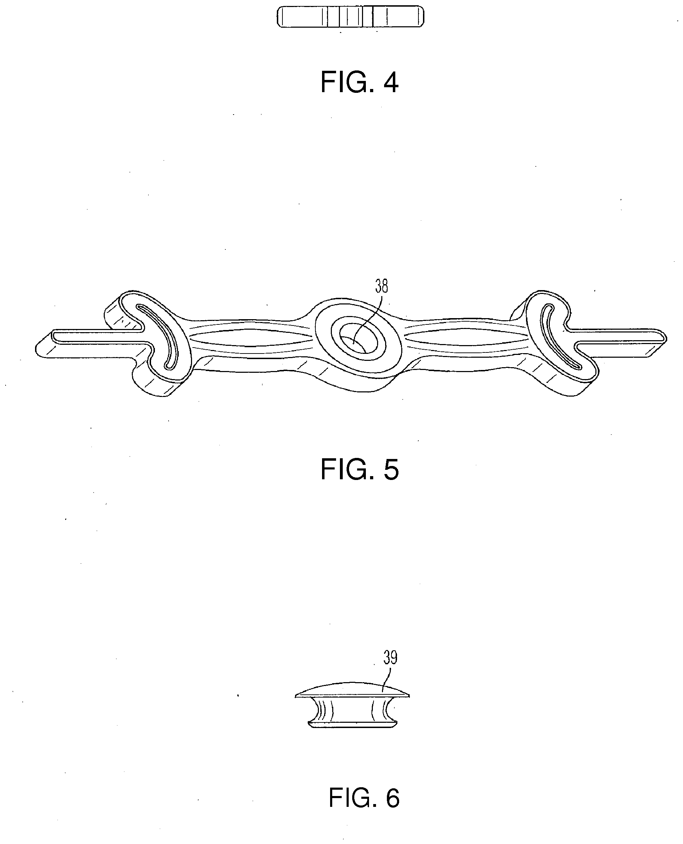

Fig. 3 is a side view of the device shown in Fig. 1. Fig. 4 is an end view. It will be seen from these views that the cross-section of the tips and central body are substantially rectangular throughout this particular example. It will be appreciated that a round cross- section for the tips may be preferred when dealing with circular eyelets or grommets. The cross section of the central body may be varied for manufacturing convenience, or for cosmetic purposes, within the limits imposed by the desired strength and elasticity of the fastener.

Fig. 5 is an alternative embodiment in which the central body bears a hole 38, into which a decorative button 39 (Fig. 28) can be press-fit. Button 39 can be decorated in any manner desired, for example, it can be of a contrasting color or attractive pattern; it can be jeweled; or it can bear a team or school logo. A small battery and LED light(s) can be built into the button if desired.

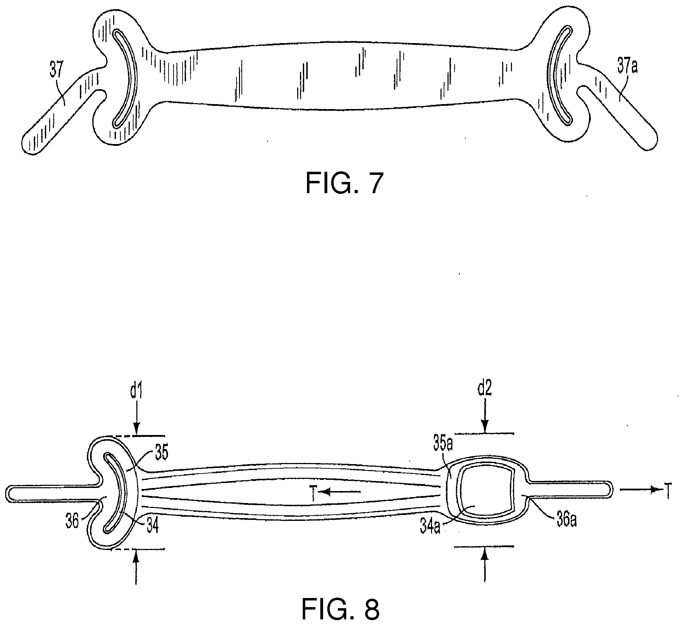

Fig. 7 shows an alternative embodiment wherein the tips 37 and 37a are disposed at an angle to the central body of the device. This embodiment may be easier to insert into eyelets in crowded environments, which may lack a clear path for perpendicular entry or exit.

Fig. 8 shows the same top view as Fig. 2, but illustrates the deformation of the opening 34a upon application of tension T. The tension causes inner portion 36a to be pulled away from outer portion 35a, and the sides of the opening are free to collapse into the enlarged opening 34a. As the deformable region is stretched, it grows narrower, and the width of the deformable region, originally dl, is reduced to d2. With sufficient tension and sufficient stretching, the deformed region can be pulled through an eyelet. Release of the tension allows the deformed region to rebound to its original shape, with the eyelet now trapped around the neck of the device.

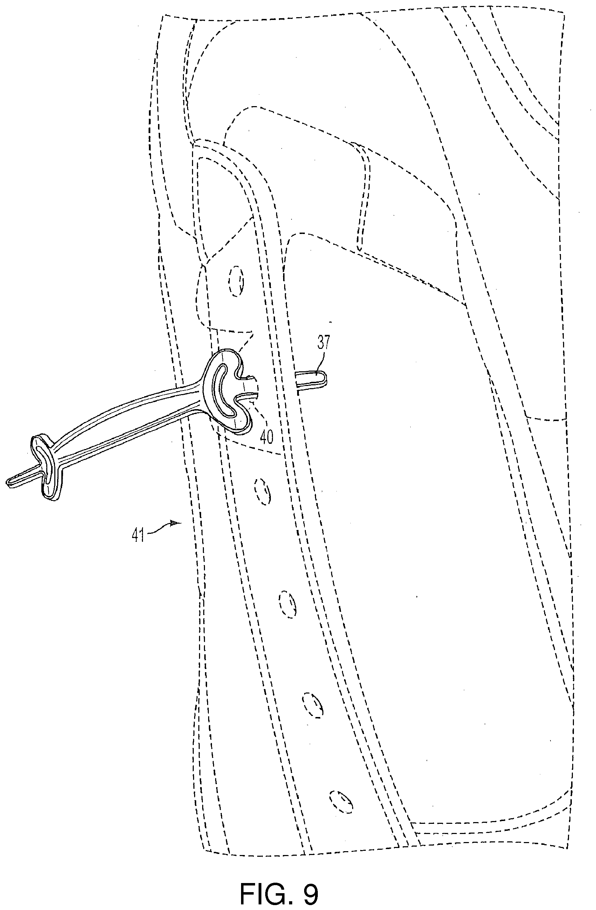

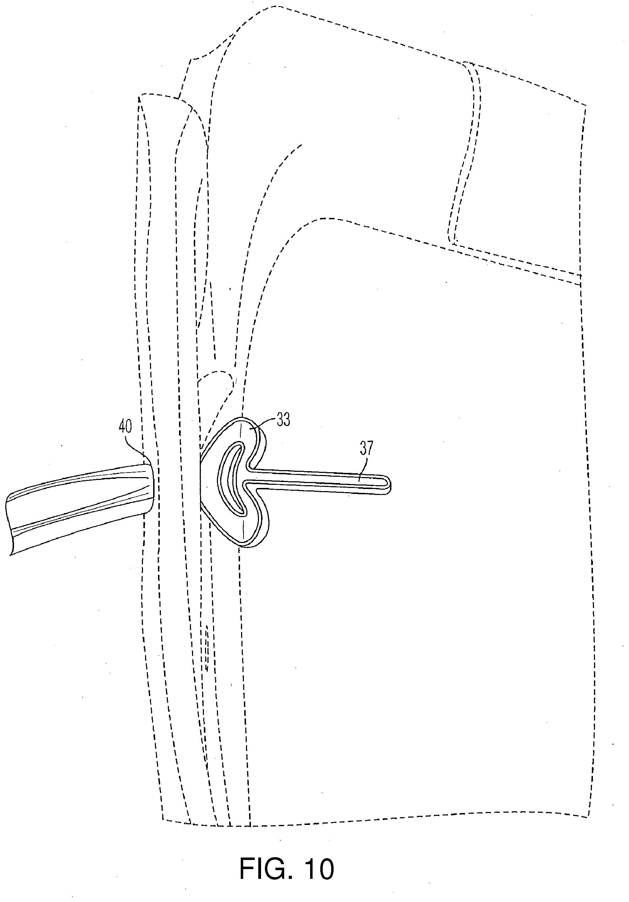

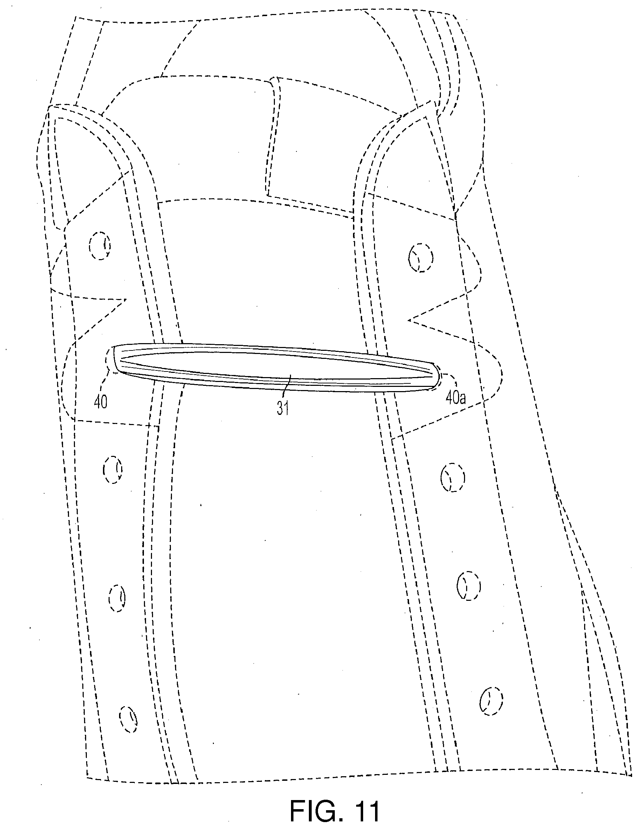

Figs. 9 - 11 show a method of use of a fastener of the invention, to fasten closed an athletic shoe 41. Tip 37 of the device is inserted into eyelet 40 (Fig. 31), and the tip is then pulled until the deformable region 33 has been pulled through the eyelet, leaving the neck of the device within the eyelet 40 as shown in Fig. 32. The tip on the other end of the device can then be inserted into an eyelet 40a on the opposite side of the shoe. Next, the deformable region can be again pulled through, and upon release of tension, the device is installed. It will be appreciated that the device can be installed diagonally if the user so desires; this will result in a more tightly fastened shoe.

## Claims

1. A fastening device for connecting two identified openings (40,40a) in a shoe (41), the fastening device comprising:
an elongated main body member (31) defining a longitudinal axis, the main body member (31) having a first end portion and a second end portion opposite of the first end portion at opposite ends of the longitudinal axis,
first and second tip end members (37,37a), located at the first end portion and second end portion of the main body member (31), respectively, the first and second tip end members (37,37a) each being adapted to fit through one of the identified openings (40,40a) in the shoe (41); and
a first elastic interference portion (33) connecting the main body member (31) and the first tip end member (37), and a second elastic interference portion (33a) connecting the main body member (31) and the second tip end member (37a),
wherein the first and second elastic interference portions (33,33a) are each normally located in a rest state wherein the first and second elastic interference portions (33,33a) define an outer dimension that prevents their passage through one of the identified openings (40,40a) in the shoe (41), and the first and second elastic interference portions (33,33a) are elastically deformable into a state that permits their passage through one of the identified openings (40,40a) in the shoe (41), and
wherein the first and second tip end members (37,37a) are coplanar with the first and second end portions, respectively, of the main body member (31),
**characterized in that**
each of the first and second elastic interference portions (37,37a) define an opening (34,34a) therethrough,
that the first and second elastic interference portions (37,37a) are elastically deformable into a stretched state that permits their passage through one of the identified openings (40,40a) in the shoe (41) and
that each of the first and second tip end members (37,37a) has a substantially uniform width that is smaller in width than the elastic interference portions (33,33a).

2. The fastening device according to claim 1, wherein the first and second elastic interference portions (33,33a) extend in an orthogonal direction to the longitudinal axis of the elongated main body member (31).

3. The fastening device according to claim 1, wherein each of the first and second elastic interference portions (33,33a) has a first protruding region that protrudes to one side of the main body member (31) and a second protruding region that protrudes to an opposite side of the main body member (31), and the first and second protruding regions being intersected by the longitudinal axis of the main body member (31).

4. The fastening device according to claim 1, wherein the elastic interference portions (33,33a) are made of an elastic material.

5. The fastening device according to claim 1, wherein the first and second elastic interference portions (33,33a) are substantially barb-shaped.

6. The fastening device according to claim 1, wherein the fastening device is symmetrical with respect to the longitudinal axis.

7. The fastening device according to claim 1, wherein each of the first and second elastic interference portions (33,33a) has a substantially convex surface and a substantially concave surface.

8. The fastening device of claim 1, wherein the elongated main body member (31), the first and second tip end members (37,37a) and the first and second elastic interference portions (33,33a) are coplanar.

## Patentansprüche

1. Befestigungsvorrichtung zur Verbindung zweier bestimmte Öffnungen (40, 40a) in einem Schuh (41), wobei die Befestigungsvorrichtung umfasst:
einen gestreckten Hauptkörperteil (31), der eine Längsachse definiert, wobei der Hauptkörperteil (31) einen ersten Endabschnitt und einen zweiten Endabschnitt, der dem ersten Endabschnitt gegenüberliegt, an zwei entgegengesetzten Enden der Längsachse umfasst,
einen ersten und einen zweiten Spitzenendteil (37, 37a), die jeweils an dem ersten Endabschnitt und dem zweiten Endabschnitt des Hauptkörperteils (31) angeordnet sind, wobei der erste und der zweite Spitzenendteil (37, 37a) jeweils dazu geeignet sind, durch eine der bestimmten Öffnungen (40, 40a) im Schuh (41) zu passen; und
einen ersten elastischen Interferenzabschnitt (33), der den Hauptkörperteil (31) mit dem ersten Spitzenendteil (37) verbindet, und einen zweiten elastischen Interferenzabschnitt (33a), der den Hauptkörperteil (31) mit dem zweiten Spitzenendteil (37a) verbindet,
wobei der erste und der zweite elastische Interferenzabschnitt (33, 33a) jeweils im Normalfall in einem Ruhestand angeordnet sind, in dem der erste und der zweite elastische Interferenzabschnitt (33, 33a) ein Außenmaß definieren, das deren Hindurchtreten durch eine der bestimmten Öffnungen (40, 40a) im Schuh (41) verhindert, und wobei der erste und der zweite elastische Interferenzabschnitt (33, 33a) in einen Zustand elastisch verformbar sind, der deren Hindurchtreten durch eine der bestimmten Öffnungen (40, 40a) im Schuh (41) erlaubt, und
wobei der erste und der zweite Endspitzteil (37, 37a) jeweils mit dem ersten und dem zweiten Endabschnitt des Hauptkörperteils (31) koplanar sind,
**dadurch gekennzeichnet, dass**
jeder der ersten und zweiten elastischen Interferenzabschnitte (33, 33a) eine Öffnung (34, 34a) durch diese definiert,
dass der erste und der zweite elastische Interferenzabschnitt (33, 33a) elastisch verformbar in einen gestreckten Zustand ist, der deren Hindurchtreten durch eine der bestimmten Öffnungen (40, 40a) im Schuh (41) erlaubt, und
dass jeder der ersten und zweiten Spitzenendteile (37, 37a) eine im Wesentlichen gleichmäßige Breite hat, welche kleiner ist, als die Breite der elastischen Interferenzabschnitte (33, 33a).

2. Befestigungsvorrichtung gemäß Anspruch 1, wobei sich der erste und der zweite elastische Interferenzabschnitt (33, 33a) in eine Richtung erstrecken, die senkrecht zu der Längsachse des gestreckten Hauptkörperteils (31) verläuft.

3. Befestigungsvorrichtung gemäß Anspruch 1, wobei jeder der ersten und zweiten elastischen Interferenzabschnitte (33, 33a) einen ersten Vorsprungbereich, der an einer Seite des Hauptkörperteils (31) hervorragt, und einen zweiten Vorsprungbereich aufweisen, der an einer entgegengesetzten Seite des Hauptkörperteils (31) hevorragt, und der erste und der zweite Vorsprungbereich durch die Längsachse des Hauptkörperteils (31) geschnitten werden.

4. Befestigungsvorrichtung gemäß Anspruch 1, wobei die elastischen Interferenzabschnitte (33, 33a) aus einem elastischen Material hergestellt sind.

5. Befestigungsvorrichtung gemäß Anspruch 1, wobei der erste und der zweite elastische Interferenzabschnitt (33, 33a) im Wesentlichen widerhakenförmig ausgebildet sind.

6. Befestigungsvorrichtung gemäß Anspruch 1, wobei die Befestigungsvorrichtung symmetrisch zur Längsachse ist.

7. Befestigungsvorrichtung gemäß Anspruch 1, wobei jeder der ersten und zweiten elastischen Interferenzabschnitte (33, 33a) eine im Wesentlichen konvexe Fläche und eine im Wesentlichen konkave Fläche aufweisen.

8. Befestigungsvorrichtung gemäß Anspruch 1, wobei der gestreckte Hauptkörperteil (31), der erste und der zweite Spitzenendteil (37, 37a) und der erste und der zweite elastische Interferenzabschnitt (33, 33a) koplanar sind.

## Revendications

1. Dispositif de fixation destiné à relier deux ouvertures déterminées (40, 40a) dans une chaussure (41), le dispositif de fixation comprenant:
un membre de corps principal allongé (31) définissant un axe longitudinal, le membre de corps principal (31) ayant une première partie terminale et une seconde partie terminale à l'opposé de la première partie terminale au niveau d'extrémités opposées de l'axe longitudinal,
un premier et un second membre d'extrémité (37, 37a) situés respectivement au niveau de la première partie terminale et de la seconde partie terminale du membre de corps principal (31), le premier et le second membre d'extrémité (37, 37a) étant chacun conçus pour passer à travers l'une des ouvertures déterminées (40, 40a) dans la chaussure (41) ; et
une première partie d'interférence élastique (33) reliant le membre de corps principal (31) et le premier membre d'extrémité (37), et une seconde partie d'interférence élastique (33a) reliant le membre de corps principal (31) et le second membre d'extrémité (37a),
dans lequel la première et la seconde partie d'interférence élastique (33) se trouvent normalement dans un état de repos dans lequel la première et la seconde partie d'interférence élastique (33, 33a) définissent une dimension extérieure qui leur interdit de passer à travers l'une des ouvertures déterminées (40, 40a) dans la chaussure (41), et la première et la seconde partie d'interférence élastique (33, 33a) sont déformables élastiquement dans un état qui leur permet de passer à travers l'une des ouvertures déterminées (40, 40a) dans la chaussure (41), et
dans lequel le premier et le second membre d'extrémité (37, 37a) sont respectivement coplanaires avec la première et la seconde partie terminale du membre de corps principal (31),
**caractérisé en ce que**
chacune des première et seconde parties d'interférence élastique (33, 33a) définissent une ouverture (34, 34a) à travers elles,
que la première et la seconde partie d'interférence élastique (33, 33a) sont déformables élastiquement dans un état étiré qui leur permet de passer à travers l'une des ouvertures déterminées (40, 40a) dans la chaussure (41) et
que le premier et le second membre d'extrémité (37, 37a) ont une largeur essentiellement uniforme qui est plus faible en largeur que les parties d'interférence élastiques (33, 33a) .

2. Dispositif de fixation selon la revendication 1, dans lequel la première et la seconde partie d'interférence élastique (33, 33a) s'étendent le long d'une direction orthogonale à l'axe longitudinal du membre de corps principal allongé (31).

3. Dispositif de fixation selon la revendication 1, dans lequel chacune des première et seconde parties d'interférence élastiques (33, 33a) possède une première région saillante qui fait saillie sur un côté du membre de corps principal (31) et une seconde région saillante qui fait saillie sur un côté opposé du membre de corps principal (31), et la première et la seconde région saillante sont coupées par l'axe longitudinal du membre de corps principal (31).

4. Dispositif de fixation selon la revendication 1, dans lequel les parties d'interférence élastiques (33, 33a) sont en matériau élastique.

5. Dispositif de fixation selon la revendication 1, dans lequel la première et la seconde partie d'interférence élastique (33, 33a) ont essentiellement la forme d'un ardillon.

6. Dispositif de fixation selon la revendication 1, dans lequel le dispositif de fixation est symétrique par rapport à l'axe longitudinal.

7. Dispositif de fixation selon la revendication 1, dans lequel chacune des première et seconde parties d'interférence élastiques (33, 33a) possède une surface essentiellement convexe et une surface essentiellement concave.

8. Dispositif de fixation selon la revendication 1, dans lequel le membre de corps principal allongé (31), le premier et le second membre d'extrémité (37, 37a) et la première et la seconde partie d'interférence élastique (33, 33a) sont coplanaires.
